# EUROPÄISCHE PATENTSCHRIFT

(11) **EP 1 632 407 B1**
(45) Veröffentlichungstag und Bekanntmachung des Hinweises auf die Patenterteilung: **12.03.2008**
(21) Anmeldenummer: 05015425.1
(22) Anmeldetag: 15.07.2005
(51) Int. Cl.: B60R 21/20

(54) **Personen-Sicherheitssystem**
Safety System for Persons
Système de securite pour des personnes

(30) Priorität: 15.07.2004 DE 202004011167 U; 28.07.2004 DE 202004011849 U; 19.05.2005 DE 102005022968; 15.06.2005 DE 102005027506
(43) Veröffentlichungstag der Anmeldung: 08.03.2006
(73) Patentinhaber: Dietmaier, Martin, 93049 Regensburg (DE)
(72) Erfinder: Dietmaier, Martin, 93049 Regensburg (DE)
(74) Vertreter: Graf, Helmut

(56) Entgegenhaltungen:
- DE-A1- 10 029 046
- DE-A1- 19 509 014
- DE-A1- 19 615 096
- DE-A1- 19 842 829
- DE-U1- 9 315 509
- US-A1- 2001 009 327
- PATENT ABSTRACTS OF JAPAN Bd. 017, Nr. 349 (C-1078), 2. Juli 1993 (1993-07-02) & JP 05 049523 A (NISSAN MOTOR CO LTD), 2. März 1993 (1993-03-02)

## Beschreibung

Die Erfindung bezieht sich auf ein Personen-Sicherheitssystem für Fahrzeuge, insbesondere Airbagsystem gemäß Oberbegriff Patentanspruch 1 oder 2.

Aufgabe der Erfindung ist es, ein besonders wirksames Personen-Sicherheitssystem aufzuzeigen. Zur Lösung dieser Aufgabe ist ein Personen-Sicherheitssystem entsprechend dem Patentanspruch 1 oder 2 ausgebildet.

Ein Personen-Sicherheitssystem gemäß den Oberbegriffen von Anspruch 1 oder 2 ist aus DE 19842829 bekannt.

Weiterbildungen der Erfindung sind Gegenstand der Unteransprüche. Die Erfindung wird im Folgenden anhand der Figuren an Ausführungsbeispielen näher erläutert. Es zeigen:
- Fig. 1: in vereinfachter Darstellung und in Seitenansicht einen herkömmlichen Autositz mit Kopfstütze, zusammen mit einer sehr schematischen Darstellung einer auf diesem Sitz sitzenden Person in einer ergonomischen Sitzhaltung;
- Fig. 2: eine Darstellung wie Figur 1, wobei die Person jedoch eine für das Lenken eines Fahrzeuges geeignete Sitzhaltung eingenommen hat;
- Fig. 3: eine Situation ähnlich Figur 2, jedoch bei einem als Airbagsystem ausgeführten Personen-Sicherheitssystem gemäß der Erfindung;
- Fig. 4: die Situation der Figur 3, jedoch nach einem unfall oder Crash, d. h. nach dem Ansprechen des Airbagsystems;
- Fig. 5: in vereinfachter schematischer Darstellung die Oberseite des Sitzes;
- Fig. 6: in verschiedenen Positionen das Auslösen des Airbagsystems bei einem Aufprall;
- Fig. 7 u. 8: in vereinfachter Darstellung in Seitenansicht sowie in Draufsicht eine weitere mögliche Ausführungsform des erfindungsgemäßen Airbagsystems;
- Fig. 9u. 10: in Seitenansicht sowie in Frontansicht einen Fahrzeugsitz mit verschiedenen, teilweise im Sitz integrierten Sensoren zur Positionsbestimmung des Kopfes einer im Sitz sitzenden Person;
- Fig. 11: in vereinfachter Darstellung und in Seitenansicht ein in Fahrzeuglängsrichtung gedämpfter bzw. gefederter Fahrzeugsitz;
- Fig. 12: in vereinfachter Darstellung und in Seitenansicht einen Pkw mit mehreren Sensoren.

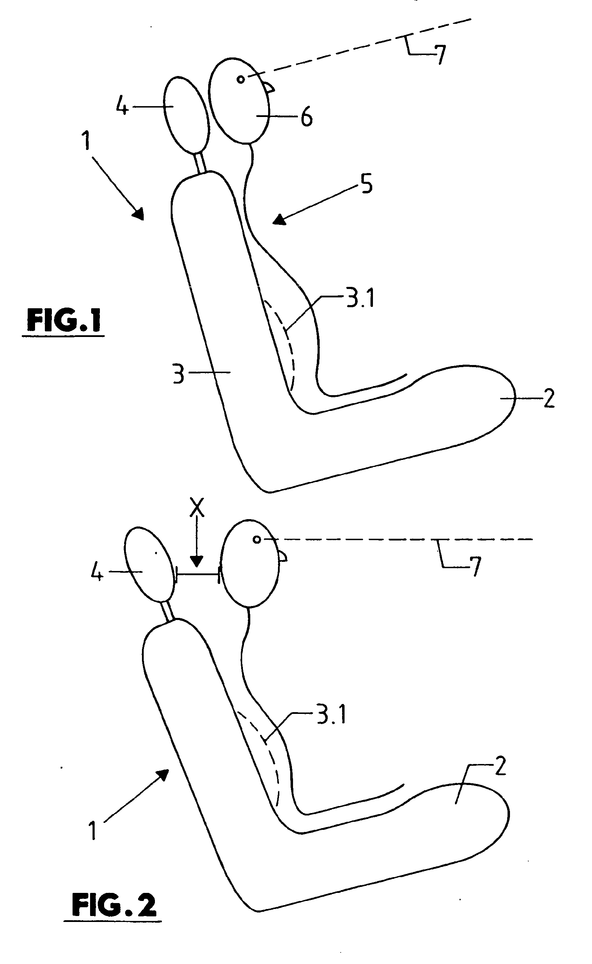

In den Figuren 1 und 2 ist 1 ein üblicher Fahrzeugsitz mit Sitzunterteil 2, Rückenlehne 3 und Kopfstütze 4. An der Lehnfläche ist die Rückenlehne 3 mit einer lordosen Stütze 3.1 für ein ergonomisches Sitzen ausgebildet. Die Person 5 weist in der Figur 1 eine ergonomische Sitzhaltung auf, in der die Person 5 sich mit ihrem Kopf 6 gegen die Kopfstütze 4 abstützt. In dieser Haltung ist allerdings die Blickrichtung 7 der Person 5 allein schon wegen der Schrägstellung der Rückenlehne 6 schräg nach oben gerichtet.

Die Figur 2 zeigt die Sitzhaltung der Person 5 beim Lenken des Kraftfahrzeugs und mit einer horizontalen oder im wesentlichen horizontalen und nach vorne gerichteten Blickrichtung 7. In diesem Fall ist der Kopf der Person 5 von der Kopfstütze 4 beabstandet. Bei einem Unfall oder Crash kann dies u.a. durch den sogenannten Peitscheneffekt zu schwerwiegenden Verletzungen insbesondere auch im Bereich der Wirbelsäule führen.

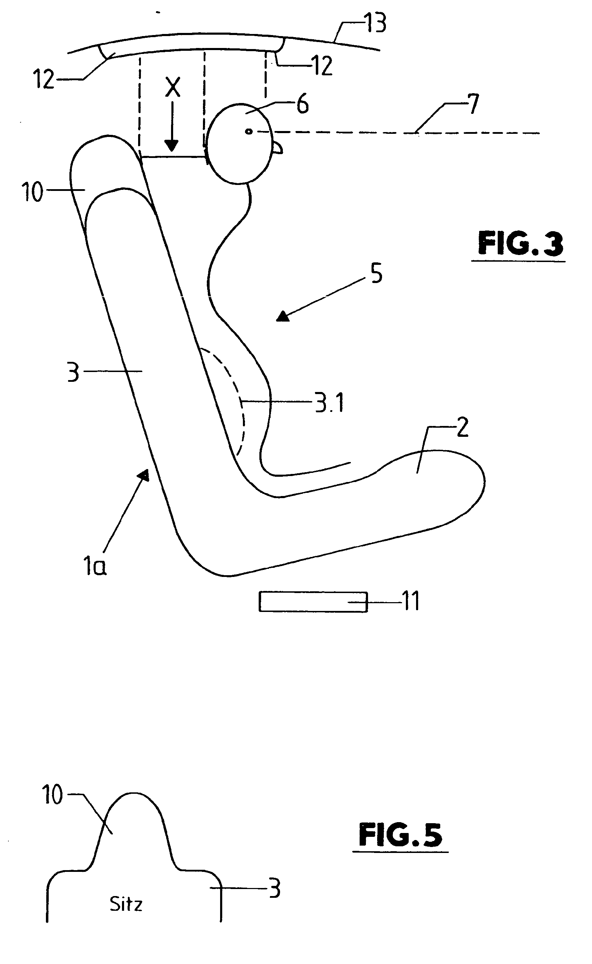

Die Figur 3 zeigt eine mögliche Ausführungsform des erfindungsgemäßen Personen-Sicherheitssystems in Form eines Airbagsystems mit im Fahrzeugsitz 1a integriertem Kopfairbag 8 für den Kopf 6 der Person 5. Dieser Airbag 8 ist zusätzlich zu dem üblichen Frontairbag 9 vorgesehen und wird zur Vermeidung des Peitscheneffektes auf jeden Fall bei einer Stoßeinwirkung auf das Fahrzeug von Hinten und/oder seitlich aktiviert. Der Frontairbag 9 ist dabei beispielsweise der im Lenkrad (beim Fahrersitz) oder in der Fahrzeugfrontkonsole (beim Beifahrersitz) untergebrachte übliche Airbag.

Die Rückenlehne 3 besitzt an der Oberseite eine spezielle, in diese Rückenlehne integrierte und in der Breite gegenüber der Rückenlehne schmälere Kopfstütze 10, in der der Kopfairbag 8 untergebracht ist. Das Airbagsystem umfasst weiterhin ein elektronisches Steuergerät 11 und wenigstens eine Sensoreinheit 12, die bei der dargestellten Ausführungsform an der Innenfläche des Fahrzeugdachs untergebracht ist und mit der berührungslos (beispielsweise durch Lichtschranken, Ultraschall, Bilderkennung usw.) u.a. ständig die Position des Kopfes 6 der Person 5 und dabei insbesondere auch der Abstand x des Kopfes 6 von der Kopfstütze 10 sowie die Neigung des Kopfes usw. erfasst und in der Steuereinheit 11 registriert werden. Bevorzugt ist die Sensoreinheit 12 so ausgebildet, dass mit ihr auch die vordere Begrenzung des Kopfes 8 erfasst wird.

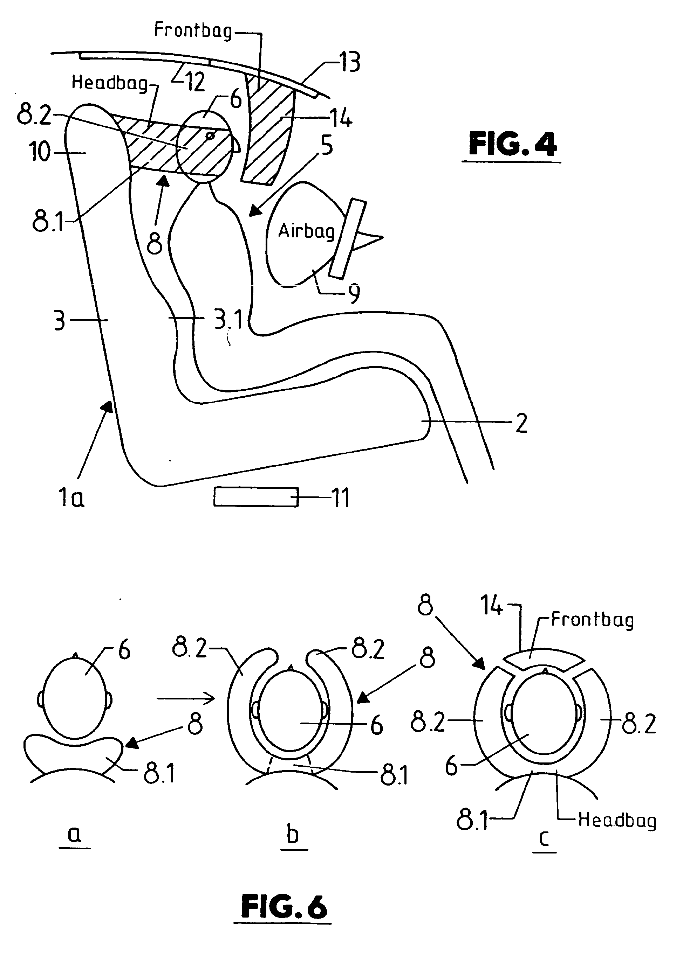

Kommt es zu einem Unfall oder Aufprall oder Crash mit einer einen vorgegebenen Beschleunigungsschwellwert übersteigenden Beschleunigung, so werden über das Steuergerät 11 der normale Airbag 9 sowie der in der Kopfstütze 10 untergebrachte Kopfairbag 8 ausgelöst, und zwar letzterer gesteuert durch die von der Sensoreinheit 12 gelieferten Informationen, d. h. insbesondere dann, wenn sich die Person 5 tatsächlich in der normalen Fahrhaltung, d. h. mit Abstand x zwischen Kopf 6 und Kopfstütze 10 befindet. Der Kopfairbag 8 ist so ausgebildet, dass er beim Aktivieren zunächst einen Kissenabschnitt 8.1 zwischen der Kopfstütze 10 und dem Kopf 6 ausbildet (Position a der Figur 6) und dann anschließend zwei den Kopf seitlich und auch teilweise vorne umschließende Kissenabschnitte 8.2 (Position b der Figur 6), so dass der Kopf 6 nahe vollständig von dem aktivierten Kopfairbag 8 eingeschlossen ist, allerdings eine freie Sicht verbleibt.

Das Steuergerät 11 wirkt mit wenigstens einem an der Fahrzeugkarosserie vorgesehenen Sensor 12 zusammen, der die Richtung und Stärke eines Aufpralls erfasst, insbesondere auch den Winkel eines Aufpralls bezogen auf die Fahrzeuglängsachse und der dann auf jeden Fall bei einem rückwärtigen Aufprall über das Steuergerät 11 ein Auslösen des Kopfairbags 8 veranlasst.

Bei der dargestellten Ausführungsform weist das Airbagsystem noch einen zusätzlichen Frontairbag 14 auf, der beispielsweise ebenfalls an der Innenfläche des Fahrzeugdachs vorgesehen ist und im aktivierten Zustand von oben her in den Fahrzeugraum hineinragt, und zwar derart, dass der aktivierte Frontairbag 14 zusammen mit dem aktivierten Kopfairbag 8 einen den Kopf 6 vollständig umschließenden Ring bildet, allerdings mit ausweichendem Abstand von der Kopfvorderseite (auch Position c der Figur 6). Auch der Frontairbag 14 wird über das Steuergerät 11 auf Grund der Informationen der Sensoreinheit 12 gesteuert. Der Frotairbag 14 ist dann Teil des den Kopfairbag aufweisenden und bei einer Stoßeinwirkung auf das Fahrzeug von Hinten und/oder schräg von Hinten und/oder seitlich aktivierten Kopfairbag-Systems, kann aber zugleich auch Teil des Frontairbag-Systems sein, welches bei einer Stoßeinwirkung auf das Fahrzeug an der Frontseite aktiviert wird.

Es besteht weiterhin die Möglichkeit, in Abhängigkeit von der Richtung bzw. dem Winkel des Aufpralls den Kopfairbag oder dessen Abschnitte 8.1 bzw. 8.2 sowie den zusätzlichen Frontairbag 14 individuell anzusteuern und/oder in Abhängigkeit von der Stärke des Aufpralls den Kopfairbag 18 bzw. dessen Abschnitte 8.1 und 8.2 und/oder den zusätzlichen Frontairbag 14 dosiert zu aktivieren, d.h. dosiert mit unterschiedlicher Gasmenge und/oder unterschiedlichem Druck zu befüllen, und zwar beispielsweise dadurch, dass der Kopfairbag 8 und/oder der zusätzliche Airbag 14 für das Aktivieren mehrere, ein Druckgas erzeugende Element aufweist und die Anzahl der Druckgas erzeugenden Elemente, die bei einem Aufprall aktiviert wird, in Abhängigkeit von der Intensität des Aufpralls gesteuert wird.

Die Abschnitte 8.1 und 8.2 des Kopfairbags werden dann beispielsweise entsprechend der Richtung des Aufpralls gesteuert ausgelöst, beispielsweise zeitversetzt.

Die Figuren 7 und 8 zeigen eine weitere Ausführungsform. In diesen Figuren ist mit 1b wiederum der Fahrzeugsitz bezeichnet, der aus dem Sitzunterteil 20 mit Rückenlehne 21 und integrierter Kopfstütze 22 besteht. Im Sitz 1 b bzw. in der Kopfstütze ist bei dieser Ausführungsform ein Kopfairbag 23 integriert, der im aktivierten Zustand einen kissenartigen ersten Abschnitt 23.1 zwischen der Kopfstütze 22 und dem Hinterkopf der Person 5, zwei seitliche zweite Abschnitte 23.2, die den Kopf 6 der Person 5 seitlich insbesondere auch im Kieferbereich übergreifen und bis an die Vorderseite des Kopfes 6 reichen, sowie einen dritten Überkopf-Abschnitt 23.3, der ausgehend von der Kopfstütze 22 oben über den Kopf bis an die Kopfvorderseite und dort etwa im Kinn-oder Halsbereich endet, sodass im aktivierten Zustand der Kopf 6 der Person vollständig von den dicht gegen den Kopf anliegenden Abschnitten 23.1 - 23.3 umschlossen ist und der Abschnitt 23.3 im Wesentlichen auch den Spalt zwischen den beiden Enden der beiden Abschnitte 23.2 ausfüllt, wie dies in der Figur 8 besonders deutlich dargestellt ist.

Der Abschnitt 23.3 ist dabei so schmal gehalten, dass für der Person 5 ein Blickfeld nach vorne verbleibt. Grundsätzlich besteht insbesondere auch die Möglichkeit, den Abschnitt 23.3 aus einem transparenten Material herzustellen. Die Aktivierung der einzelnen Abschnitte 23.1 - 23.3 erfolgt beispielsweise zeitlich nacheinander, und zwar z. B. in der Form, dass bei einem Crash, insbesondere bei einem Crash an einer Fahrzeugseite oder bei einem Crash am Heck des Fahrzeugs oder bei einem Crash schräg auf das Fahrzeug zunächst der Abschnitt 23.1 und dann zeitlich verzögert die Abschnitte 23.2 und der Abschnitt 23.3 aktiviert werden, sodass Verletzungen durch ein Schleudertrauma bei einem Crash, insbesondere Halswirbelverletzungen zuverlässig verhindert sind.

Auch bei dieser Ausführung besteht weiterhin die Möglichkeit, in Abhängigkeit von der Richtung bzw. dem Winkel des Aufpralls den Kopfairbag 23 oder dessen Abschnitte 23.2 individuell anzusteuern und/oder in Abhängigkeit von der Stärke des Aufpralls den Kopfairbag 23 bzw. dessen Abschnitte dosiert zu aktivieren, d.h. dosiert mit unterschiedlicher Gasmenge und/oder unterschiedlichem Druck zu befüllen, und zwar beispielsweise dadurch, dass der Kopfairbag 23 für das Aktivieren mehrere, ein Druckgas erzeugende Element oder Einheiten aufweist und die Anzahl der Druckgas erzeugenden Elemente, die bei einem Aufprall aktiviert wird, in Abhängigkeit von der Intensität des Aufpralls gesteuert wird. Die Abschnitte 23.2 werden dann beispielsweise entsprechend der Richtung des Aufpralls gesteuert ausgelöst, beispielsweise zeitversetzt.

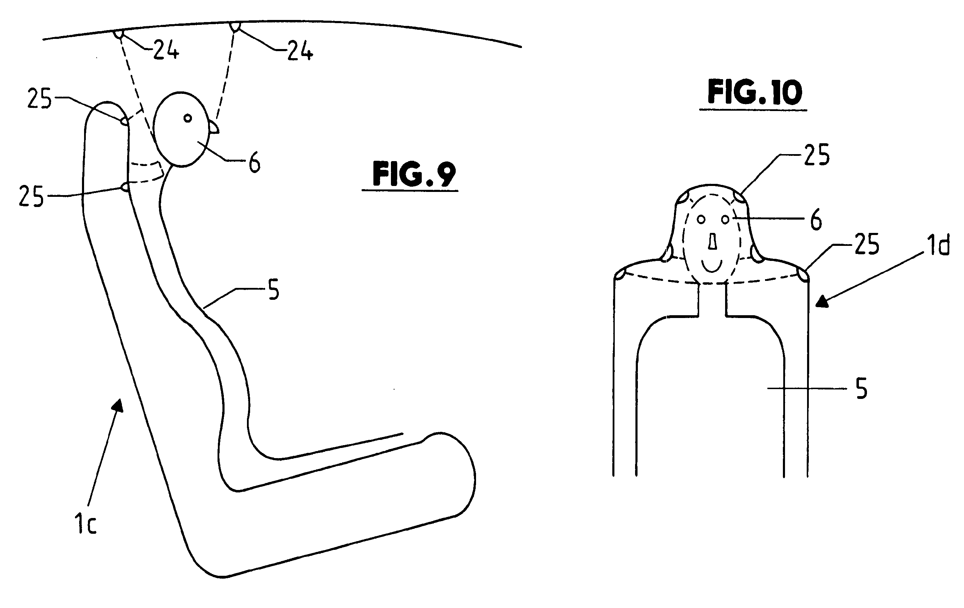

Die Figur 9 und 10 zeigen verschiedene Sensoranordnungen teilweise am Fahrzeug sowie teilweise auch integriert im Fahrzeugsitz 1c bzw. 1b. Mit diesen Sensoren 24 bzw. 25 wird jeweils die Lage insbesondere des Kopfes 6 überwacht und in Abhängigkeit von dieser Lage der Kopfairbag 23 gesteuert aktiviert, beispielsweise in der Form, dass bei einem Fahrzeugcrash durch Aktivieren zunächst der Abschnitte 23.1 und 23.2 der Kopf in eine Normallage gebracht und in dieser fixiert wird und dass erst dann der Abschnitt 23.3 aktiviert wird, um so die in den Figuren 7 und 8 dargestellte optimale dichte und nahezu geschlossene Aufnahme des Kopfes 6 im aktivierten Kopfairbag 23 zu erreichen, und zwar unabhängig davon, wie die Lage oder Haltung des Kopfes 6 vor dem Crash zufällig war.

Im Detail zeigt die Figur 9 eine Sensoranordnung, bei der mehrere Sensoren 24 an der Innenfläche des Fahrzeugdaches sowie auch zusätzlich mehrere Sensoren 25 am Fahrzeugsitz 1c bzw. im Bereich der dortigen Kopfstütze vorgesehen sind. Bei der Ausführung der Figur 10 sind am dortigen Fahrzeugsitz 1d Sensoren 25 im Bereich der Rückenlehne des Fahrzeugsitzes sowie im Bereich der in die Rückenlehne integrierten Kopfstütze vorgesehen. Die Ausführung der Figur 10 eignet sich insbesondere für Cabrios.

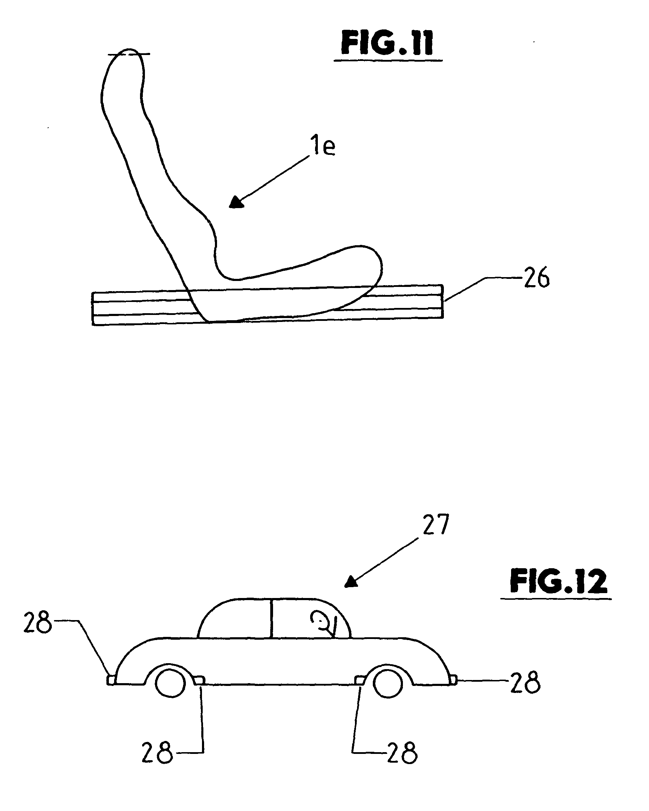

Die Figur 11 zeigt als weitere mögliche Ausführungsform einen Fahrzeugsitz 1e, der auf einem Gleitsystem, beispielsweise Schienensystem 26 in Fahrzeuglängsrichtung verschiebbar ist, und zwar gegen die Wirkung von Feder- und/oder Dämpfungsmitteln aus einer Normal- oder Gebrauchsposition nach vorne bei einem Frontaufprall oder Frontcrash und nach hinten bei einem Heckaufprall bzw. Heckcrash. Die Feder- oder Dämpfungsmittel sind beispielsweise von einer oder mehreren Gasfedern oder von einer Hydraulik gebildet. Auch anderen Ausführungen sind denkbar. Der Sitz 1e bzw. dessen Rückenlehne und in diese integrierte Kopfstütze sind wiederum mit einem nicht dargestellten Kopfairbag versehen, beispielsweise mit dem Kopfairbag 23 der Figuren 7 und 8.

Bei dieser Ausführung besteht weiterhin die Möglichkeit, den Sitz 1e zusätzlich in Fahrzeugquerrichtung gleit- oder verschiebbar vorzusehen, und zwar aus einer Normalposition gegen die Wirkung von Feder- und Dämpfungsmitteln. Hierfür ist beispielsweise die Schienenanordnung 26 Teil eines in Fahrzeugquerrichtung beweglichen Schlittens. Grundsätzlich ist es möglich, den Sitz 1e so auszubilden, dass er für eine Bewegung in Fahrzeuglängsrichtung und/oder in Fahrzeugquerrichtung gegen die Wirkung der vorhandenen Dämpfungs- und/oder Federmittel durch eine Steuerung erst dann freigegeben wird, wenn ein Crash zu erwarten ist. Weiterhin ist es möglich, die Feder- und/oder Dämpfungsmittel dynamisch auszubilden und deren Charakteristik in Abhängigkeit von der zu erwartenden Aufprallgeschwindigkeit bzw. von der zu erwartenden Stärke des Aufpralls zu steuern.

Die Figur 12 zeigt in vereinfachter Darstellung einen Pkw 27, der mit mehreren Außensensoren 28 versehen ist, mit denen dann beim Fahren des Fahrzeugs 27 ständig der Abstand zu anderen festen oder bewegten Objekten, z.B. Fahrzeugen, Hindernissen usw. gemessen oder erfasst wird, und zwar der Abstand bezogen auf die Frontseite, die Heckseite und die beiden Fahrzeuglängsseiten. Die Sensoren 28 sind beispielsweise Entfernungsmesssensoren, z.B. optische Sensoren, wie InfrarotSensoren, Kameras, Ultraschall-Sensoren, auf Basis von elektromagnetischen wellenarbeitende Sensoren usw.

Mit den Sensoren 28 werden der Abstand bzw. die Annäherung des Fahrzeugs 27 an andere Objekte oder umgekehrt die Annäherung anderer Objekte an das Fahrzeug 27 ständig erfasst und aufgrund der von den Sensoren 28 gelieferten Signale in dem Steuergerät, beispielsweise in dem Steuergerät 11 die Geschwindigkeit der Annäherung an ein Hindernis bzw. der Annäherung eines anderen Objektes (Fahrzeugs) und/oder der mögliche Zeitpunkt eines Crashes ermittelt, sodass das Steuergerät 11 eine optische und/oder akustische Warnung vor einem Crash veranlassen kann sowie auch eine Voreinstellung bzw. "Scharfschaltung" der verschiedenen Airbags bzw. deren Ansteuerung, sodass diese dann beim Eintreten eines Aufpralls praktisch verzögerungsfrei aktiviert werden können. Weiterhin ist es auch möglich, die Feder- und Dämpfungsmittel des Sitzes 1e in Abhängigkeit von den Signalen der Sensoren 28 zu steuern.

### Bezugszeichenliste

- 1, 1a - 1e: Fahrzeugsitz
- 2: Sitzunterteil
- 3: Rückenlehne
- 3.1: Lordosenstütze
- 4: Kopfstütze
- 5: Person
- 6: Kopf
- 7: Blickrichtung
- 8: Kopfairbag
- 8.1, 8.2: Abschnitte des Kopfairbags
- 9: normaler Airbag
- 10: Kopfstütze
- 11: Steuergerät
- 12: Sensoreinheit
- 13: Fahrzeugdach
- 14: zusätzlicher Frontairbag
- 20: Sitzunterteil
- 21: Rückenlehne
- 22: Kopfstütze
- 23: Kopfairbag
- 23.1 - 23.3: Abschnitt des Kopfairbags
- 24, 25: Sensor zur Bestimmung der Lage des Kopfes 6
- 26: Schienensystem
- 27: Pkw
- 28: Außensensor

## Patentansprüche

1. Personen-Sicherheitssystem für Fahrzeuge, insbesondere für Pkws, mit wenigstens einem von einem Steuergerät (11) gesteuerten Fahrzeugfrontairbag (9) und mit wenigstens einem Kopfairbag (8), der im vollständig aktivierten Zustand zumindest einen Kissenabschnitt (8.1) zwischen dem Kopf (6) einer Person (5) und einer an einem Fahrzeugsitz (1, 1a- 1e) gebildeten oder vorgesehenen Kopfstütze (10, 22) ausbildet,
wobei das Airbagsystem bei einer Stoßeinwirkung durch von Sensoren (12) gelieferte Signale gesteuert ist, **dadurch gekennzeichnet,**
**dass** der Kopf-Airbag (8) im aktivierten Zustand zusätzlich wenigstens zwei den Kopf (6) seitlich umschließende Kissen-Abschnitte (8.2) ausbildet,
**dass** das Airbagsystem durch die von den Sensoren (12) gelieferten Signale so gesteuert ist, dass die einzelnen Abschnitte (8.1, 8.2) des Kopf-Airbags (8) individuell und/oder zeitlich nacheinander aktiviert werden,
**dass** wenigstens ein weiterer Frontairbag (14) vorgesehen ist, der im aktivierten Zustand ein Kissen für die Vorderseite des Kopfes (6) so ausbildet, dass der Kopf (6) vollständig von den Kissenabschnitten (8.1, 8.2) des aktivierten Kopfairbags (8) und dem aktivierten Frontairbag (14) umschlossen ist.

2. Personen-Sicherheitssystem für Fahrzeuge, insbesondere für Pkws, mit wenigstens einem von einem Steuergerät (11) gesteuerten Fahrzeugfrontairbag (9) und mit wenigstens einem zusätzlichen Kopfairbag (8), der im vollständig aktivierten Zustand zumindest einen Kissenabschnitt (8.1) zwischen dem Kopf (6) einer Person (5) und einer an einem Fahrzeugsitz (1, 1a- 1e) gebildeten oder vorgesehenen Kopfstütze (10, 22) ausbildet,
**dadurch gekennzeichnet,**
**dass** der Kopf-Airbag (8) im aktivierten Zustand zusätzlich wenigstens zwei den Kopf (6) seitlich umschließende Kissen-Abschnitte (8.2) ausbildet und den Kopf auch an der der Kopfstütze (4, 10) abgewandten Vorderseite zumindest soweit umgreift, dass der Kopf-Airbag (8) einer Bewegung des Kopfes von der Kopfstütze weg entgegenwirkt,
und wobei das Airbagsystem durch von Sensoren (12) gelieferte Signale so gesteuert ist, dass bei einer Stoßeinwirkung die einzelnen Abschnitte (8.1, 8.2) individuell und/oder zeitlich nacheinander aktiviert werden.

3. Personen-Sicherheitssystem nach Anspruch 1 oder 2, **dadurch gekennzeichnet, dass** der Kopfairbag im aktivierten Zustand den Kopf (6) der im Fahrzeugsitz sitzenden Person (5) mit seinen Abschnitten dicht umschließt.

4. Personen-Sicherheitssystem nach einem der vorhergehenden Ansprüche, **dadurch gekennzeichnet, dass** der Kopfairbag im aktivierten Zustand auch einen Überkopfabschnitt ausbildet, der von der Kopfstütze bis an die Vorderseite des Kopfes (6), beispielsweise bis an den Mund- oder Kinnbereich des Kopfes (6), diesen oben umschließend reicht.

5. Personen-Sicherheitssystem nach einem der vorhergehenden Ansprüche, **dadurch gekennzeichnet, dass** die Abschnitte des Kopfairbag zeitlich nacheinander aktiviert werden, und zwar zunächst der erste Abschnitt und dann die zweiten sowie der dritte Abschnitt.

6. Personen-Sicherheitssystem nach einem der vorhergehenden Ansprüche, **dadurch gekennzeichnet, dass** das Airbagsystem durch von Sensoren gelieferten Signalen so gesteuert ist, dass bei einer Stoßeinwirkung auf das Fahrzeug an der Frontseite zumindest der wenigstens eine Frontairbag (9, 14) aktiviert wird, bei einer Stoßeinwirkung auf das Fahrzeug von Hinten und/oder seitlich eine Aktivierung des Kopf-Airbags (8) erfolgt.

7. Personen-Sicherheitssystem nach einem der vorhergehenden Ansprüche, **dadurch gekennzeichnet, dass** der Fahrzeugsitz in Fahrzeuglängsrichtung und/oder Querrichtung gegen die Wirkung von Feder und/oder Dämpfungsmitteln beweglich vorgesehen ist.

8. Personen-Sicherheitssystem nach einem der vorhergehenden Ansprüche, **dadurch gekennzeichnet,**
**dass** der Kopf-Airbag (8) im Fahrzeugsitz (1a) und/oder in der Kopfstütze (4, 10) des Fahrzeugsitzes (1a), beispielsweise in einer im Fahrzeugsitz integrierten Kopfstütze (4, 10) untergebracht ist, und/oder
**dass** der zusätzliche Frontairbag (14) an der Innenseite des Fahrzeugdachs (13) vorgesehen ist.

9. Personen-Sicherheitssystem nach einem der vorhergehenden Ansprüche, **dadurch gekennzeichnet, dass** sich im aktivierten Zustand der wenigstens eine zusätzliche Frontairbags (14) und aktivierte Kopfairbag (8) zu einem Airbag-Ring ergänzen.

10. Personen-Sicherheitssystem nach einem der vorhergehenden Ansprüche, **gekennzeichnet durch** eine Sensoreinheit (12) zur Erfassung der Lage des Kopfes in Bezug auf den Fahrzeugsitz (1a) bzw. in Bezug auf die dortige Kopfstütze (4, 10) und zur Steuerung zumindest des Kopfairbags und/oder des zusätzlichen Frontairbags (14),
wobei beispielsweise
die Sensoreinheit (12) auch zur Erfassung der vorderen Kopfbegrenzung bzw. zur Erfassung des Kopfes (6) insgesamt ausgebildet ist.

11. Personen-Sicherheitssystem nach einem der vorhergehenden Ansprüche, **gekennzeichnet**
**durch** wenigstens einen Crashsensor an der Fahrzeugkarosserie zur Ansteuerung des Steuergerätes (11) in der Weise, dass zumindest bei einem Aufprall von hinten der Kopfairbag (8) und/oder der zusätzliche Frontairbag (14) ausgelöst werden.

12. Personen-Sicherheitssystem nach einem der vorhergehenden Ansprüche, **gekennzeichnet**
**durch** Außensensoren (28) zur Überwachung des Abstandes des Fahrzeugs (27) von stehenden und/oder sich bewegenden Objekten und zur Erzeugung von Sensorsignalen, die in einem Steuer- und/oder Überwachungsgerät (11) zur Ermittlung eines möglichen Aufpralls und/oder dessen Intensität und/oder dessen Richtung und/oder einer Aufprallgeschwindigkeit verwendet werden, und zwar zur Veranlassung eines optischen und/oder akustischen Alarms und/oder zur Preadaption der Airbags und/oder der Feder- und/oder Dämpfungsmittel des in Fahrzeuglängs- und/oder Querrichtung beweglichen Fahrzeugsitzes (1e).

## Claims

1. Passenger security system for vehicles, more particularly for passenger cars, with at least one vehicle front airbag (9) controlled by a control device (11) and with at least one head airbag (8) which in the fully activated state forms at least one cushion section (8.1) between the head (6) of a person (5) and a head restraint (10, 22) provided or formed on a vehicle seat (1, 1a- 1e),
wherein the airbag system is controlled through signals supplied by sensors (12) in the event of crash action,
**characterised in that** the head airbag (8) in the activated state additionally forms at least two cushion sections (8.2) which surround the head (6) at the sides, that the airbag system is controlled through the signals supplied by the sensors (12) so that the individual sections (8.1, 8.2) of the head airbag (8) are activated individually and/or chronologically in succession, that at least a further front airbag (14) is provided which in the activated state forms a cushion for the front of the head (6) so that the head (6) is completely enclosed by the cushion sections (8.1, 8.2) of the activated head airbag (8) and the activated front airbag (14).

2. Passenger security system for vehicles, more particularly for passenger cars, with at least one vehicle front airbag (9) controlled by a control device (11) and with at least one head airbag (8) which in the fully activated state forms at least one cushion section (8.1) between the head (6) of a person (5) and a head restraint (10, 22) provided or formed on a vehicle seat (1, 1a- 1e),
**characterised in that** the head airbag (8) in the activated state additionally forms at least two cushion sections (8.2) which surround the head (6) at the sides and also engages round the head at the front remote from the head restraint (4,10) at least so much that the head airbag (8) counteracts any movement of the head away from the head restraint and wherein the airbag system is controlled through signals supplied by sensors (12) so that in the event of crash action the individual sections (8.1, 8.2) are activated individually and /or chronologically in succession.

3. Passenger security system according to claim 1 or 2 **characterised in that** the head airbag in the activated state with its sections tightly surrounds the head (6) of the person (5) sitting in the vehicle seat.

4. Passenger security system according to one of the preceding claims **characterised in that** the head airbag in the activated state also forms an overhead section which reaches from the head restraint to the front of the head (6), by way of example over to the mouth or chin area of the head (6), to enclose this at the top.

5. Passenger security system according to one of the preceding claims **characterised in that** the sections of the head airbag are activated chronologically one after the other, namely first the first section and then the second section and then the third section.

6. Passenger security system according to one of the preceding claims **characterised in that** the airbag system is controlled by signals supplied by sensors so that in the event of crash action to the front of the vehicle at least the at least one front airbag (9,14) is activated, in the event of crash action to the rear and/or side of the vehicle the head airbag (8) is activated.

7. Passenger security system according to one of the preceding claims **characterised in that** the vehicle seat is provided capable of movement in the vehicle longitudinal direction and/or transverse direction against the action of springs and/or damping means.

8. Passenger security system according to one of the preceding claims **characterised in that** the head airbag (8) is fitted in the vehicle seat (1a) and/or in the head restraint (4, 10) of the vehicle seat (1a), by way of example in a head restraint (4, 10) integrated in the vehicle seat, and/or that the additional front airbag (14) is provided on the inside of the vehicle roof (13).

9. Passenger security system according to one of the preceding claims **characterised in that** in the activated state the at least one additional front airbag (14) and activated head airbag (8) make up one complete airbag ring.

10. Passenger security system according to one of the preceding claims **characterised by** a sensor unit (12) for detecting the position of the head in relation to the vehicle seat (1a) or in relation to the head restraint (4,10) there and for controlling at least the head airbag and/or the additional front airbag (14), wherein by way of example the sensor unit (12) is also formed for detecting the front head restriction and for detecting the head (6) as a whole.

11. Passenger security system according to one of the preceding claims **characterised by** at least one crash sensor on the vehicle body for governing the control device (11) in such a way that the head airbag (8) and/or the additional front airbag (14) are triggered at least in the event of rear impact.

12. Passenger security system according to one of the preceding claims **characterised by** external sensors (28) for monitoring the distance of the vehicle (27) from stationary and/or moving objects and for generating sensor signals which are used in a control and/or monitoring device (11) for determining a possible impact and/or the intensity thereof and/or the direction thereof and/or an impact speed, namely for engendering an optical and/or acoustic alarm and/or for the pre-adaption of the airbag and/or the spring and/or damping means of the vehicle seat (1e) which is movable in the vehicle longitudinal and/or transverse direction.

## Revendications

1. Système de sécurité pour des personnes occupant des véhicules, en particulier des automobiles, comprenant au moins un airbag (coussin d'air) frontal (9) de véhicule commandé par un appareil de commande (11) et au moins un airbag de tête (8) qui, à l'état complètement activé, forme au moins une partie de coussin (8.1) entre la tête (6) d'une personne (5) et un appui-tête (10, 22) prévu ou formé sur un siège de véhicule (1, 1a - 1e), le système d'airbags étant commandé lors d'un impact par des signaux fournis par des capteurs (12), **caractérisé en ce que** l'airbag de tête (8) forme en plus, à l'état activé, au moins deux parties de coussin (8.2) entourant latéralement la tête (6), **en ce que** le système d'airbags est commandé par les signaux fournis par les capteurs (12) de telle manière que les parties individuelles (8.1, 8.2) de l'airbag de tête (8) soient activés individuellement et / ou l'un après l'autre dans le temps, **en ce qu'**il est prévu au moins un autre airbag frontal (14) qui forme, à l'état activé, un coussin pour le côté avant de la tête (6) de telle manière que la tête (6) soit complètement entourée par les parties de coussin (8.1, 8.2) de l'airbag de tête (8) activé et par l'airbag frontal (14) activé.

2. Système de sécurité pour des personnes occupant des véhicules, en particulier des automobiles, comprenant au moins un airbag frontal (9) de véhicule commandé par un appareil de commande (11) et au moins un airbag de tête supplémentaire (8) qui, à l'état complètement activé, forme au moins une partie de coussin (8.1) entre la tête (6) d'une personne (5) et un appui-tête (10, 22) prévu ou formé sur un siège de véhicule (1, 1a - 1e), **caractérisé en ce que** l'airbag de tête (8) forme en plus, à l'état activé, au moins deux parties de coussin (8.2) entourant latéralement la tête (6) et enveloppe aussi la tête sur le côté avant opposé à l'appui-tête (4, 10) au moins au point que l'airbag de tête (8) s'oppose à ce que la tête s'écarte de l'appui-tête, et le système d'airbags étant commandé par des signaux fournis par des capteurs (12) de telle manière que, lors d'un impact, les différentes parties (8.1, 8.2) soient activées individuellement et / ou l'une après l'autre dans le temps.

3. Système de sécurité pour des personnes selon la revendication 1 ou 2, **caractérisé en ce que** l'airbag de tête, à l'état activé, entoure étroitement avec ses parties la tête (6) de la personne (5) assise dans le siège de véhicule.

4. Système de sécurité pour des personnes selon l'une des revendications précédentes, **caractérisé en ce que** l'airbag de tête, à l'état activé, forme également une partie au-dessus de la tête qui s'étend de l'appui-tête jusqu'au côté avant de la tête (6), par exemple jusqu'à la région de la bouche ou du menton de la tête (6), entourant celle-ci au-dessus.

5. Système de sécurité pour des personnes selon l'une des revendications précédentes, **caractérisé en ce que** les parties de l'airbag de tête sont activées l'une après l'autre dans le temps et, en fait, tout d'abord la première partie et puis la deuxième ainsi que la troisième partie.

6. Système de sécurité pour des personnes selon l'une des revendications précédentes, **caractérisé en ce que** le système d'airbags est commandé par des signaux fournis par des capteurs de telle manière que, lors d'un impact sur le côté avant du véhicule, ledit au moins un airbag frontal (9, 14) soit activé, lors d'un impact sur l'arrière et / ou le côté du véhicule, une activation de l'airbag de tête (8) ait lieu.

7. Système de sécurité pour des personnes selon l'une des revendications précédentes, **caractérisé en ce que** le siège de véhicule est prévu de manière mobile dans le sens longitudinal du véhicule et / ou le sens transversal contre l'action de ressorts et / ou de moyens d'amortissement.

8. Système de sécurité pour des personnes selon l'une des revendications précédentes, **caractérisé en ce que** l'airbag de tête (8) est logé dans le siège de véhicule (1a) et / ou dans l'appui-tête (4, 10) du siège de véhicule (1a), par exemple dans un appui-tête (4, 10) intégré dans le siège de véhicule, et/ou **en ce que** l'airbag frontal supplémentaire (14) est prévu sur le côté intérieur du toit de véhicule (13).

9. Système de sécurité pour des personnes selon l'une des revendications précédentes, **caractérisé en ce qu'**à l'état activé, ledit au moins un airbag frontal supplémentaire (14) et l'airbag de tête activé (8) se complètent pour former un anneau d'airbags.

10. Système de sécurité pour des personnes selon l'une des revendications précédentes, **caractérisé par** une unité de capteur (12) pour détecter la position de la tête par rapport au siège de véhicule (1a) ou encore par rapport à l'appui-tête local (4, 10) et pour commander au moins l'airbag de tête et/ou l'airbag frontal supplémentaire (14), l'unité de capteur (12) étant aussi configurée pour détecter la limite avant de la tête ou encore pour détecter l'ensemble de la tête (6).

11. Système de sécurité pour des personnes selon l'une des revendications précédentes, **caractérisé par** au moins un capteur de collision sur la carrosserie de véhicule pour actionner l'appareil de commande (11) de telle manière que lors d'une collision par l'arrière, l'airbag de tête (8) et/ou l'airbag frontal supplémentaire (14) soient déclenchés.

12. Système de sécurité pour des personnes selon l'une des revendications précédentes, **caractérisé par** des capteurs extérieurs (28) pour surveiller la distance du véhicule (27) par rapport à des objets immobiles et / ou se déplaçant et pour générer des signaux de capteur qui sont utilisés dans un appareil de commande et / ou de surveillance (11) pour déterminer une collision éventuelle et / ou son intensité et / ou son sens et / ou une vitesse de collision et, en fait, pour provoquer une alarme optique et / ou acoustique et / ou pour pré-adapter l'airbag et / ou les moyens de ressort et / ou d'amortissement du siège de véhicule (1e) mobile dans le sens longitudinal et / ou transversal du véhicule.
